# EUROPÄISCHE PATENTSCHRIFT

(11) **EP 0 978 525 B1**
(45) Veröffentlichungstag und Bekanntmachung des Hinweises auf die Patenterteilung: **01.03.2006**
(21) Anmeldenummer: 99112460.3
(22) Anmeldetag: 30.06.1999
(51) Int. Cl.: C08G 77/20, C08G 77/04, C09D 183/07

(54) **Acryloxypropyl- oder Methacryloxypropyl-Gruppen enthaltende Siloxan-Oligomere**
Acryloxypropyl or methacryloxypropyl group containing siloxane oligomers
Siloxanes oligomères contenant des groupes acryloxypropyle ou méthacryloxypropyle

(30) Priorität: 03.08.1998 DE 19834990
(43) Veröffentlichungstag der Anmeldung: 09.02.2000
(73) Patentinhaber: Degussa AG, 40474 Düsseldorf (DE)
(72) Erfinder: Standke, Burkhard, Dr., 79540 Lörrach (DE); Monkiewicz, Jaroslaw, Dr., 79618 Rheinfelden (DE); Frings, Albert-Johannes, Dr., 79618 Rheinfelden (DE); Laven, Ralf, Dr., 79739 Schwörstadt (DE); Edelmann, Roland, 79664 Wehr (DE); Jenkner, Peter, Dr., 79618 Rheinfelden (DE); Mack, Helmut, Dr., 79618 Rheinfelden (DE); Horn, Michael, Dr., 79618 Rheinfelden (DE); Orlia, Wolfgang-Wilhelm, Dr., 47918 Tönisvorst (DE)

(56) Entgegenhaltungen:
- EP-A- 0 253 211
- EP-A- 0 518 057
- EP-A- 0 760 372
- DE-A- 19 624 032

## Beschreibung

Die vorliegende Erfindung betrifft Gemische kettenförmiger und cyclischer Siloxan-Oligomerer der allgemeinen Formeln I und II, 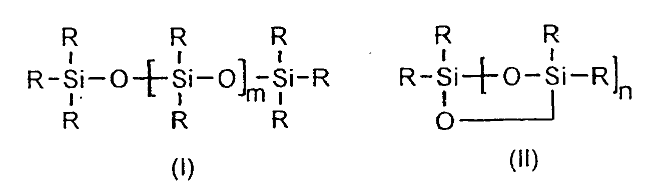
in denen die Substituenten R neben Alkoxy-Gruppen aus ungesättigten organofunktionellen-Gruppen und gegebenenfalls aus weiteren organofunktionellen Gruppen bestehen, wobei an ein Silicium-Atom höchstens eine ungesättigte organofunktionelle Gruppe gebunden ist.

Ferner betrifft die vorliegende Erfindung ein Verfahren zur Herstellung besagter Gemische sowie ihre Verwendung.

Gemische kettenförmiger und cyclischer Siloxan-Oligomerer werden beispielsweise durch eine gezielte Hydrolyse bzw. Kondensation organofunktioneller Alkoxysilane erhalten. Ein besonderes Problem bei der Herstellung multifunktioneller Siloxan-Oligomerer stellt das stark unterschiedliche Hydrolyse- bzw. Kondensationsverhalten der einzelnen Organoalkoxy- bzw. Organochlorsilane dar.

EP 0 760 372 A2 offenbart Wasser-haltige Auflösungen von OH-Gruppenenthaltenden und Acryl-funktionellen Organosilanen bzw. Organosiloxanen. Diese Organosiloxane sind praktisch vollständig hydrolysiert.

Aus EP 0 518 057 A1 und DE 196 24 032 A1 gehen Gemische kettenförmiger und/oder cyclischer Vinyl- sowie Alkyl-funktioneller Siloxan-Oligomerer hervor, die im übrigen Alkoxygruppen tragen. Solche Gemische werden beispielsweise zur Hydrophobierung von mineralischen Oberflächen und pulverförmigen Stoffen sowie als Vernetzungsmittel für thermoplastische Polyolefine eingesetzt.

Aufgabe der vorliegenden Erfindung war es, Gemische aus weiteren Sitoxan-Oligomeren bereitstellen. Ein besonders Anliegen der vorliegenden Erfindung war es Gemische aus Siloxan-Oligomeren bereitzustellen, die auch als Bindemittel in Farben und Lacken einsetzbar sind.

Die gestellte Aufgabe wird erfindungsgemäß entsprechend den Angaben der Patentansprüche gelöst.

Überraschender Weise wurde gefunden, daß man ein Gemisch kettenförmiger und cyclischer Siloxan-Oligomerer der allgemeinen Formeln I und II, 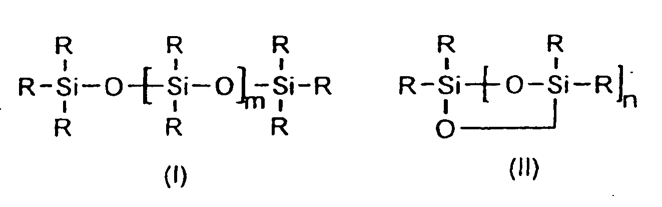
in denen die Substituenten R aus 3-Methacryloxypropyl- oder 3-Acryloxypropyl-Gruppen und Methoxy-, Ethoxy- und/oder Propoxy-Gruppen und gegebenenfalls Alkyl-, Fluoralkyl-, Isoalkyl-, Cycloalkyl- mit 1 bis 18 C-Atomen und/oder Aryl-Gruppen mit 6 bis 12 C-Atomen bestehen, wobei an ein Silicium-Atom höchstens eine 3-Methacryloxypropyl- oder 3-Acryloxypropyl-Gruppe gebunden ist und der Oligomerisierungsgrad für Verbindungen der allgemeinen Formel I im Bereich von 2 < m < 25 und der für Verbindungen der allgemeinen Formel II im Bereich von 2 ≤ n ≤ 8 liegen und der Quotient aus dem molaren Verhältnis Si/Alkoxy-Gruppierung ≥ 0,5 ist, durch eine gezielte Umsetzung erhalten kann, indem man ein 3-Methacryloxypropyltrialkoxysilan oder ein 3-Acryloxypropyl-trialkoxysilan oder ein 3-Methacryloxypropylmethyldialkoxysilan oder ein 3-Acryloxypropyl-methyldialkoxysilan als Komponente A und gegebenfalls ein Alkyl-, Fluoralkyl-, Isoalkyl-, Cycloalkylmit 1 bis 18 C-Atomen oder Phenyl-trialkoxysilan oder ein Alkyl-, Fluoralkyl-, Isoalkyl-, Cycloalkyl- mit 1 bis 18 C-Atomen oder Phenyl-methyldialkoxysilan oder ein Gemisch besagter Alkoxysilane als Komponente B und gegebenenfalls ein Tetraalkoxysilan als Komponente C einsetzt und unter Zusatz von 0,6 bis 1,0 mol Wasser pro 1 mol Si und der 0,1- bis 5fachen Gewichtsmenge an Methanol und/oder Ethanol, bezogen auf die eingesetzten Alkoxysilane, in Gegenwart einer organischen oder anorganischen Säure als Katalysator, der bevorzugt gleichzeitig mit der Wassergabe oder danach dem Reaktionsgemisch zugegeben wird, bei einer Temperatur von 10 bis 95 °C, gezielt hydrolysiert bzw. kondensiert und anschließend das Produktgemisch unter vermindertem Druck und einer Sumpftemperatur von 30 bis 110 °C, vorzugsweise 60 bis 110 °C, destillativ aufarbeitet. Geeigneterweise werden dabei der Katalysator, der freie Alkohol und Reste der monomeren, nicht hydrolysierten Ausgangsstoffe praktisch quantitativ aus dem Produkt entfernt. Als Katalysator kann man beispielsweise Essigsäure oder Ameisensäure einsetzen. Bevorzugt setzt man beim erfindungsgemäßen Verfahren Chlorwasserstoff (HCl) als Katalysator ein.

So erhaltene erfindungsgemäße Gemische kettenförmiger und cyclischer Siloxan-Oligomerer sind üblicherweise homogene, klare, farblose bis schwach gelb gefärbte, niedrigviskose, lagerstabile Flüssigkeiten und besitzen bevorzugt einen Flammpunkt >100°C.

Durch die oben dargelegte Herstellweise kann man in vorteilhafter Weise erfindungsgemäße Siloxan-Oligomere erzeugen, welche bevorzugt eine statistische Verteilung verschiedenfunktioneller [-Si(R)(R)O-]-Einheiten besitzen.

Insbesondere können erfindungsgemäße Gemische kettenförmiger und cyclischer Siloxan-Oligomerer vorteilhaft in Farben und Lacken als Binder oder zur Modifizierung von Bindersystemen eingesetzt werden.

Auch ist es vorteilhaft, daß der Siedepunkt der erfindungsgemäßen Gemische kettenförmiger und cyclischer Siloxan-Oligomerer in der Regel bei einer Temperatur >200 °C liegt.

Gegenstand der vorliegenden Erfindung ist daher ein Gemisch kettenförmiger und cyclischer Siloxan-Oligomerer der allgemeinen Formeln I und II, 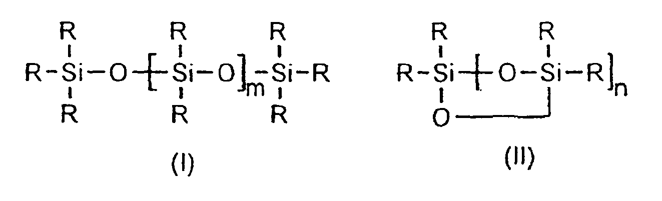
in denen die Substituenten R aus 3-Methacryloxypropyl- oder 3-Acryloxypropyl-Gruppen und Methoxy-, Ethoxy- und/oder Propoxy-Gruppen und gegebenenfalls Alkyl-, Fluoralkyl-, Isoalkyl-, Cycloalkyl- mit 1 bis 18 C-Atomen und/oder Aryl-Gruppen mit 6 bis 12 C-Atomen bestehen, wobei an ein Silicium-Atom höchstens eine 3-Methacryloxypropyl- oder 3-Acryloxypropyl-Gruppe gebunden ist und der Oligomerisierungsgrad für Verbindungen der allgemeinen Formel I im Bereich von 2 < m < 25 und der für Verbindungen der allgemeinen Formel II im Bereich von 2 ≤ n ≤ 8 liegen und der Quotient aus dem molaren Verhältnis Si/Alkoxy-Gruppierung ≥ 0,5 ist.

Erfindungsgemäße Gemische kettenförmiger und cyclischer Siloxan-Oligomerer weisen vorzugsweise einen Gehalt an Alkoxy-Gruppen von mehr als 0,1 Gew.-% und weniger als 30 Gew.-%, besonders vorzugsweise 5 bis 25 Gew.-%, bezogen auf das Gewicht der vorliegenden Siloxan-Oligomere, auf.

Vorzugsweise bestehen in einem erfindungsgemäßen Gemisch die Substituenten R aus (i) Methacryloxypropyl-Gruppen und (ii) Methoxy- oder Ethoxy-Gruppen. Für die Herstellung solcher Gemische setzt man geeigneterweise 3-Methacryloxypropyltrimethoxysilan oder 3-Methacryloxypropyltriethoxysilan ein. Für deren Herstellung kann man aber auch eine Mischung aus 3-Methacryloxypropyltrimethoxysilan und Tetramethoxysilan einsetzen.

Ebenfalls bevorzugt bestehen in einem erfindungsgemäßen Gemisch die Substituenten R aus (i) 3-Methacryloxypropyl-Gruppen und (ii) Methoxy- oder Ethoxy-Gruppen und (iii) Methyl-, Propyl-, Isobutyl-, Octyl-, Hexadecyl- oder Phenyl-Gruppen. Für die Herstellung solcher Gemische kann man von einer Mischung aus 3-Methacryloxypropyltrimethoxysilan und n-Propyl-trimethoxysilan oder von einer Mischung aus 3-Methacryloxy-propyltrimethoxysilan und Octyltrimethoxysilan oder von einer Mischung aus 3-Methacryloxypropyltrimethoxysilan, Octyltrimethoxysilan und Tetramethoxysilan oder auch von einer Mischung aus 3-Methacryloxypropyltrimethoxysilan und n-Propyltrimethoxysilan oder einer Mischung aus 3-Methacryloxypropyltrimethoxysilan und Isobutyltrimethoxysilan oder einer Mischung aus 3-Methacryloxypropyltrimethoxysilan und Tridecafluor-1,1,2,2-tetrahydrooctyl-1-trimethoxysilan oder einer Mischung aus 3-Methacryloxypropyltrimethoxysilan und Phenyltrimethoxysilan, um nur einige Beispiele zu nennen, ausgehen.

Die Substituenten R bevorzugter erfindungsgemäße Gemische kettenförmiger und cyclischer Siloxan-Oligomerer können auch aus (i) 3-Methacryloxypropyl-Gruppen und (ii) Methoxy- oder Ethoxy-Gruppen und (iii) Methyl-Gruppen und (iiii) Propyl-, Isobutyl-, Octyl-, Hexadecyl-, Phenyl-Gruppen bestehen. Für die Herstellung solcher Gemische kann man beispielsweise von 3-Methacryloxypropyltrimethoxysilan und n-Propyl-methyldimethoxysilan oder von 3-Methacryloxypropyl-methyldimethoxysilan und Octyltrimethoxysilan oder von 3-Methacryloxypropyl-methyldimethoxysilan und n-Propyl-methyldiethoxysilan oder von 3-Methacryloxypropyltrimethoxysilan, n-Propyltrimethoxysilan und Methyltrimethoxysilan oder von 3-Methacryloxypropyl-methyldimethoxysilan, Octyltrimethoxysilan und Tetramethoxysilan oder von 3-Methacryloxypropyl-methyldimethoxysilan, n-Propyl-methyldiethoxysilan und Tetramethoxysilan ausgehen.

Bevorzugt weisen erfindungsgemäße Gemische kettenförmiger und cyclischer Siloxan-Oligomerer eine Viskosität von 3 bis 80 mPa s, besonders vorzugsweise von 4 bis 40 mPa s, auf.

Als Beispiele seien nachfolgend einige bevorzugte Systeme kettenförmiger und cyclischer Siloxan-Oligomer aufgeführt: 3-Methacryloxypropyl-/Alkoxy-siloxane, 3-Methacryloxypropyl-/Methyl-/Alkoxy-siloxane, 3-Methacryloxypropyl-/Propyl-/Alkoxy-siloxane, 3-Methacryloxypropyl-/Isobutyl-/Alkoxy-siloxane, 3-Methacryloxypropyl-/Octyl-/Alkoxy-siloxane, 3-Methacryloxypropyl-/Hexadecyl-/Alkoxy-siloxane, 3-Methacryloxypropyl-/Phenyl-/Alkoxy-siloxane, 3-Methacryloxypropyl-/Heptafluorhexyl-/Alkoxy-siloxane 3-Methacryloxypropyl-/Methyl-/Phenyl-/Alkoxy-siloxane, 3-Methacryloxypropyl-/Methyl-/Octyl-/Alkoxy-siloxane, 3-Methacryloxypropyl-/Methyl-/Propyl-/Alkoxy-siloxane, 3-Methacryloxypropyl-/Methyl-/Octyl-/Alkoxy-siloxane, 3-Methacryloxypropyl-/Methyl-/Heptafluorhexyl-/Alkoxy-siloxane, 3-Methacryloxypropyl-/Propyl-/Heptafluorhexyl-/Alkoxy-siloxane, 3-Methacryloxypropyl-/Octyl-/Heptafluorhexyl-/Alkoxy-siloxane, wobei die Alkoxy-Gruppen bevorzugt Methoxy- oder Ethoxy-Gruppen sind, es können aber auch Ethoxy- und MethoxyGruppen nebeneinander vorliegen.

Ferner ist Gegenstand ein Verfahren zur Herstellung eines erfindungsgemäßen Gemischs kettenförmiger und cyclischer Siloxan-Oligomerer durch gezielte Hydrolyse, wobei man ein 3-Methacryloxypropyltrialkoxysilan oder ein 3-Acryloxypropyltrialkoxysilan oder ein 3-Methacryloxypropyl-methyl-dialkoxysilan oder ein 3-Acryloxypropyl-methyldialkoxysilan als Komponente A und gegebenfalls ein Alkyl-, Fluoralkyl-, Isoalkyl-, Cycloalkyl- mit 1 bis 18 C-Atomen oder Phenyl-trialkoxysilan oder Alkyl-, Fluoralkyl-, Isoalkyl-, Cycloalkyl- mit 1 bis 18 C-Atomen oder Phenyl-methyl-dialkoxysilan oder ein Gemisch besagter Alkoxysilane als Komponente B und gegebenenfalls ein Tetraalkoxysilan als Komponente C einsetzt und unter Zusatz von 0,6 bis 1,0 mol Wasser pro 1 mol Si und der 0,1- bis 5fachen Gewichtsmenge an Methanol und/oder Ethanol, bezogen auf die eingesetzten Alkoxysilane, in Gegenwart einer Säure als Katalysator, vorzugsweise HCl, bei einer Temperatur von 10 bis 95 °C gezielt hydrolysiert und kondensiert und anschließend das Produktgemisch unter vermindertem Druck und einer Sumpftemperatur von 30 bis 110 °C destillativ aufarbeitet.

Im allgemeinen führt man das erfindungsgemäße Verfahren wie folgt aus:
In der Regel legt man zunächst die Komponente A, gegebenenfalls Komponente B und gegebenenfalls Komponente C vor. Der Alkoxysilanmischung kann ein Löse- bzw. Verdünnungsmittels, beispielsweise Methanol oder Ethanol, zugegeben werden. Geeigneterweise gibt man ferner die für die Umsetzung berechnete Menge an Wasser zu. Den Katalysator kann man mit der Wassergabe oder danach einbringen, geeigneterweise unter guter Durchmischung, beispielseise unter Rühren. Vor oder nach der Wasser- bzw. Katalysatorzugabe kann man das Reaktionsgemisch erwärmen und nach der Umsetzung das so erhaltene Produktgemisch destillativ aufarbeiten.

Beim erfindungsgemäßen Verfahren setzt man die Komponenten A, B und C vorzugsweise in einem molaren Verhältnis A : B : C von 1 : 0 : 0 bis 1 : 10 : 0, vorzugsweise von 1 :0:0 bis 1 : 4 : 0, oder von 1 :0:0 bis 1 : 0 : 10, vorzugsweise von 1 : 0: 0 bis 1 : 0 : 4, oder von 1 :0: 0 bis 1 : 10: 10, vorzugsweise von 1 : 0 : 0 bis 1 : 4 : 4, ein. Insbesondere werden dabei als Komponente B Alkyl- oder Phenyl-alkoxysilane oder Gemische aus Alkyl- und Fluoralkyl-alkoxysilanen oder Gemische aus Alkyl- und Phenyl-alkoxysilanen bevorzugt eingesetzt. Hierzu kann man fluoralkylfunktionelle Alkoxysilane mit mono-, oligo- oder perfluorierten Alkylgruppen, insbesondere solche mit 1 bis 9 C-Atomen, einsetzen.

Ferner setzt man beim erfindungsgemäßen Verfahren bevorzugt Alkoxysilane mit Methoxy- oder Ethoxy-Gruppen entsprechend dem als Löse- bzw. Verdünnungsmittel verwendeten Alkohol ein. Als Löse- bzw. Verdünnungsmittel verwendet man geeigneterweise Methanol oder Ethanol oder eine Mischung aus Methanol und Ethanol. Man kann aber auch andere Alkohole oder Alkoholmischungen verwenden.

Beim erfindungsggemäßen Verfahren führt man die Hydrolyse und Kondensation eingesetzter Alkoxysilane bevorzugt unter Normaldruck bei einer Temperatur von 10 bis 85 °C, besonders vorzugsweise bei 20 bis 50 °C, durch. Üblicherweise führt man die Umsetzung unter Normaldruck durch. Man kann die Umsetzung aber auch unter vermindertem Druck oder bei Überdruck durchführen. Geeigneterweise läßt man das Reaktionsgemisch über 0,5 bis 3 Stunden reagieren, bevor man mit der destillativen Aufarbeitung des Produktgemischs beginnt.

Nach destillativer Aufarbeitung enthält das erfindungsgemäße Produkt bevorzugt weniger als 0,5 Gew.-% der Komponenten A, B und C und insbesondere weniger als 2 Gew.%, besonders vorzugsweise weniger als 1 Gew.%, an freien Alkoholen.

Erfindungsgemäße Gemische kettenförmiger und cyclischer Siloxan-Oligomerer können vorteilhaft beispielsweise, aber nicht ausschließlich folgenden Verwendungen zugeführt werden:

Gegenstand der vorliegenden Erfindung ist somit die Verwendung eines erfindungsgemäßen Gemisches kettenförmiger und cyclischer Siloxan-Oligomerer als Additive in mit feinteiligen anorganischen Füllstoffen hochgefüllten Gießharzen auf der Basis fließfähiger, härtbarer Methacrylsäureester. Hierdurch kann in vorteilhafter Weise eine deutliche Viskositätsreduzierung des Gießharzes im Vergleich zu analogen Gießharzen ohne Zusatz der beanspruchten Komponenten erzielt werden (EP 0 253 211 A2).

Gegenstand der vorliegenden Erfindung ist daher auch die Verwendung eines erfindungsgemäßen Gemisches kettenförmiger und cyclischer Siloxan-Oligomerer zur Modifizierung und Vernetzung organischer Harze.

Ferner ist Gegenstand der vorliegenden Erfindung die Verwendung eines erfindungsgemäßen Gemisches kettenförmiger und cyclischer Siloxan-Oligomerer zur Verbesserung der mechanischen Festigkeit und optischen Eigenschaften von Kunststoffgegenständen und Formkörpern.

Gegenstand der vorliegenden Erfindung ist auch die Verwendung eines erfindungsgemäßen Gemisches kettenförmiger und cyclischer Siloxan-Oligomerer für die Behandlung und Modifizierung der Oberfläche von Glasfasern, insbesondere für eine verbesserte Haftvermittlung in glasfaserverstärkten Kunststoffen.

Darüber hinaus ist Gegenstand der vorliegenden Erfindung die Verwendung eines erfindungsgemäßen Gemisches kettenförmiger und cyclischer Siloxan-Oligomerer als Co-Bindemittel in Lacken und als Komponente in Klarlacken. Durch den Einsatz erfindungsgemäßer Gemische kettenförmiger und cyclischer Siloxan-Oligomerer kann eine deutliche Verbesserung von Anwendungseigenschaften erzielt werden, insbesondere eine verbesserte Wetterbeständigkeit, eine hohe Kratzfestigkeit sowie eine Verbesserung der Chemikallenbeständigkeit.

Gegenstand der vorliegenden Erfindung ist auch die Verwendung eines erfindungsgemäßen Gemisches kettenförmiger und cyclischer Siloxan-Oligomerer zur Herstellung von Beschichtungen, die durch Wärmebehandlung bei einer Temperatur von 40 bis 200 °C, bevorzugt 80 bis 150 °C, und/oder durch Behandlung mit Strahlung, beispielsweise durch UV- oder Mikrowellen, in an sich bekannter Weise zur Aushärtung gebracht werden.

Darüber hinaus ist Gegenstand der vorliegenden Erfindung die Verwendung eines erfindungsgemäßen Gemisches kettenförmiger und cyclischer Siloxan-Oligomerer für die Behandlung oder Beschichtung von mineralischen oder metallischen Oberflächen. Durch eine solche Behandlung kann man die Oberflächeneigenschaften in vorteilhafter Weise modifizieren. So kann man erfindungsgemäße Gemische insbesondere als Hydrophobierungsmittel und/oder Haftvermittler einsetzen, beispielweise für Füllstoffe oder Pigmente, insbesondere für Glimmer, Aluminium, Messing, Kupferpigmente, Perlglanzpigmente usw.

Daher ist auch Gegenstand der vorliegenden Erfindung die Verwendung eines erfindungsgemäßen Gemisches kettenförmiger und cyclischer Siloxan-Oligomerer zur Silanisierung pulverförmiger Stoffe, bevorzugt auch für TiO₂, Kaolin, Aluminiumhydroxid, CaCO₃, Talkum sowie Quarz- oder Cristobalitmehle.

Die vorliegende Erfindung wird durch die nachfolgenden Beispiele näher erläutert:

### Beispiel 1

In einem 2-1-Rührreaktor aus Glas mit Vakuum-, Dosier- und Destillationseinrichtung werden 992 g 3-Methacryloxypropyltrimethoxysilan vorgelegt und anschließend 57,6 g Wasser, vorher gemischt mit 0,2g 37 Gew.-% wäßriger HCl, und 256 g Methanol bei Raumtemperatur unter Normaldruck zudosiert. Das Gemisch wird zum Sieden erhitzt und 1 Stunde unter leichtem Rückfluß gehalten. Anschließend wird der größte Teil des Methanols und der HCl innerhalb von 2 Stunden unter Normaldruck abdestilliert. Danach werden unter Anlegen von Vakuum bei von 900 mbar auf ca. 1 mbar fallenden Druck und einer Sumpftemperatur unter 80 °C die Reste an Methanol, HCl und Ausgangsstoffe entfernt und das Sumpfprodukt 2 Stunden unter diesen Bedingungen gehalten. Man erhält 840 g Siloxan-Oligomer mit folgenden Eigenschaften:

| | |
|---|---|
| Freies Methanol (gaschromatographisch): | 0,3 Gew.-% |
| Viskosität: | 35 mPa s (DIN 53 015) |
| Siedepunkt: | 257 °C (ASTM D-1120) |
| Flammpunkt: | 152 °C (DIN 51 755) |
| Dichte: | 1,117 g/ml (DIN 51 757) |
| Cl-Gehalt: | 100 mg/kg |
| Mittlere Molmasse: | 650 g/mol (Gelpermeationschromatographie) |

### Beispiel 2

In einem 2-1-Rührreaktor aus Glas mit Vakuum-, Dosier- und Destillationseinrichtung werden 744 g 3-Methacryloxypropyltrimethoxysilan und 492,9 g Propyltrimethoxysilan vorgelegt und anschließend 86,4 g Wasser, vorher gemischt mit 0,3 g 37Gew.-% wäßriger HCl, und 192 g Methanol bei Raumtemperatur unter Normaldruck zudosiert. Das Gemisch wird zum Sieden erhitzt und 1 Stunde unter leichtem Rückfluß gehalten. Anschließend wird der größte Teil des Methanols und der HCl innerhalb von 3 Stunden unter Normaldruck abdestilliert. Danach werden unter Anlegen von Vakuum bei von 900 mbar auf ca. 1 mbar fallenden Druck und einer Sumpftemperatur unter 95 °C die Reste an Methanol, HCl und Ausgangsstoffe entfernt und das Sumpfprodukt 2 Stunden unter diesen Bedingungen gehalten. Man erhält 1 020 g Siloxan-Oligomer mit folgenden Eigenschaften:

| | |
|---|---|
| Freies Methanol (gaschromatographisch): | 0,6 Gew.-% |
| Viskosität: | 14,3 mPa s (DIN 53 015) |
| Siedepunkt: | 277 °C (ASTM D-11209 |
| Flammpunkt: | 110 °C (DIN 51 755) |
| Dichte: | 1,083 g/ml (DIN 51 757) |
| Cl-Gehalt: | 200 mg/kg |
| Mittlere Molmasse: | 570 g/mol (Gelpermeationschromatographie) |

## Patentansprüche

1. Gemisch kettenförmiger und cyclischer Siloxan-Oligomerer der allgemeinen Formeln I und II, 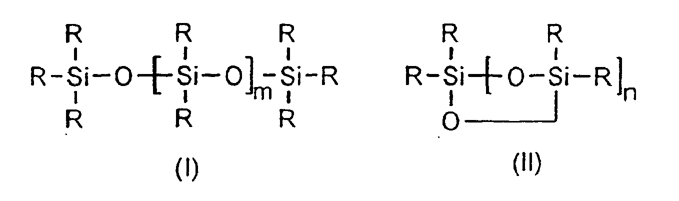
in denen die Substituenten R aus 3-Methacryloxypropyl- oder 3-Acryloxypropyl-Gruppen und Methoxy-, Ethoxy- und/oder Propoxy-Gruppen und gegebenenfalls Alkyl-, Fluoralkyl-, Isoalkyl-, Cycloalkylmit 1 bis 18 C-Atomen und/oder Aryl-Gruppen mit 6 bis 12 C-Atomen bestehen, wobei an ein Silicium-Atom höchstens eine 3-Methacryloxypropyl- oder 3-Acryloxypropyl-Gruppe gebunden ist und der Oligomerisierungsgrad für Verbindungen der allgemeinen Formel I im Bereich von 2 < m < 25 und der für Verbindungen der allgemeinen Formel II im Bereich von 2 ≤ n ≤ 8 liegen und der Quotient aus dem molaren Verhältnis Si/Alkoxy-Gruppierung ≥ 0,5 ist.

2. Gemisch kettenförmiger und cyclischer Siloxan-Oligomerer nach Anspruch 1,
**gekennzeichnet durch**
einen Gehalt an Alkoxy-Gruppen von mehr als 0,1 Gew.-% und weniger als 30 Gew.-%, bezogen auf das Gewicht der vorliegenden Siloxan-Oligomere.

3. Gemisch kettenförmiger und cyclischer Siloxan-Oligomerer nach Anspruch 1 oder 2,
daduch **gekennzeichnet**,
daß die Substituenten R aus (i) 3-Methacryloxypropyl-Gruppen und (ii) Methoxy- oder Ethoxy-Gruppen bestehen.

4. Gemisch kettenförmiger und cyclischer Siloxan-Oligomerer nach Anspruch 1 oder 2,
**dadurch gekennzeichnet,**
**daß** die Substituenten R aus (i) 3-Methacryloxypropyl-Gruppen und (ii) Methoxy- oder Ethoxy-Gruppen und (iii) Methyl-, Propyl-, Isobutyl-, Octyl-, Hexadecyl- oder Phenyl-Gruppen bestehen.

5. Gemisch kettenförmiger und cyclischer Siloxan-Oligomerer nach Anspruch 1 oder 2,
**dadurch gekennzeichnet,**
**daß** die Substituenten R aus (i) 3-Methacryloxypropyl-Gruppen und (ii) Methoxy- oder Ethoxy-Gruppen und (iii) Methyl-Gruppen und (iiii) Propyl-, Isobutyl-, Octyl-, Hexadecyl- oder Phenyl-Gruppen bestehen.

6. Gemisch kettenförmiger und cyclischer Siloxan-Oligomerer nach einem der Ansprüche 1 bis 5,
**gekennzeichnet durch**
eine Viskosität von 3 bis 80 mPa s.

7. Gemisch kettenförmiger und cyclischer Siloxan-Oligomerer nach einem der Ansprüche 1 bis 6,
**gekennzeichnet durch**
einen Flammpunkt >100 °C.

8. Gemisch kettenförmiger und cyclischer Siloxan-Oligomerer nach mindestens einem der Ansprüche 1 bis 7,
**gekennzeichnet durch**
einen Siedepunkt >200 °C.

9. Gemisch kettenförmiger und cyclischer Siloxan-Oligomerer nach mindestens einem der Ansprüche 1 bis 8,
**gekennzeichnet durch** weniger als 0,5 Gew.-% der Komponenten A, ausgewählt aus der Reihe 3-Methacryloxypropyltrialkoxysilan, 3-Acryloxypropyltrialkoxysilan, 3-Methacryloxypropylmethyldialkoxysilan und 3-Acryloxypropylmethyldialkoxysilan, B, ausgewählt aus der Reihe Alkyl-, Fluoralkyl-, Isoalkyl-, Cycloalkyl- mit 1 bis 18 C-Atomen oder Phenyltrialkoxysilan, Alkyl-, Fluoralkyl-, Isoalkyl-, Cycloalkyl- mit 1 bis 18 C-Atomen oder Phenyl-methyldialkoxysilan oder deren Gemisch, und C, einem Tetraalkoxysilan, und weniger als 2 Gew.-% an freien Alkoholen.

10. Verfahren zur Herstellung eines Gemisches kettenförmiger und cyclischer Siloxan-Oligomerer nach den Ansprüchen 1 bis 9 durch gezielte Hydrolyse, wobei man ein 3-Methacryloxypropyltrialkoxysilan oder ein 3-Acryloxypropyltrialkoxysilan oder ein 3-Methacryloxypropyl-methyl-dialkoxysilan oder ein 3-Acryloxypropyl-methyldialkoxysilan als Komponente A und gegebenfalls ein Alkyl-, Fluoralkyl-, lsoalkyl-, Cycloalkyl- mit 1 bis 18 C-Atomen oder Phenyltrialkoxysilan oder ein Alkyl-, Fluoralkyl-, Isoalkyl-, Cycloalkyl- mit 1 bis 18 C-Atomen oder Phenyl-methlyldialkoxysilan oder deren Gemisch als Komponente B und gegebenenfalls ein Tetraalkoxysilan als Komponente C einsetzt und unter Zusatz von 0,6 bis 1,0 mol Wasser pro 1 mol Si und der 0,1- bis 5fachen Gewichtsmenge an Methanol und/oder Ethanol, bezogen auf die eingesetzten Alkoxysilane, in Gegenwart einer Säure als Katalysator bei einer Temperatur von 10 bis 95°C gezielt hydrolysiert und kondensiert und anschließend das Produktgemisch unter vermindertem Druck und einer Sumpftemperatur von 30 bis 110 °C destillativ aufarbeitet.

11. Verfahren nach Anspruch 10,
**dadurch gekennzeichnet,**
**daß** man die Komponenten A, B und C in einem molaren Verhältnis A : B : C von 1 : 0 : 0 bis 1 : 10 : 0 oder von 1 : 0 : 0 bis 1 : 0 : 10 oder von 1 : 0 : 0 bis 1 : 10 : 10 einsetzt.

12. Verfahren nach Anspruch 10 oder 11,
**dadurch gekennzeichnet,**
**daß** man Alkoxysilane mit Methoxy- oder Ethoxy-Gruppen entsprechend dem als Löse- bzw. Verdünnungsmittel verwendeten Alkohol einsetzt.

13. Verfahren nach einem der Ansprüche 10 bis 12,
**dadurch gekennzeichnet,**
**daß** man als Katalysator Chlorwasserstoff einsetzt.

14. Verfahren nach einem der Ansprüche 10 bis 13,
**dadurch gekennzeichnet,**
**daß** man die Hydrolyse und Kondensation unter Normaldruck bei einer Temperatur von 10 bis 85 °C durchführt.

15. Verwendung eines Gemisches kettenförmiger und cyclischer Siloxan-Oligomerer nach den Ansprüchen 1 bis 14 als Additive in mit feinteiligen anorganischen Füllstoffen hochgefüllten Gießharzen auf der Basis fließfähiger, härtbarer Methacrylsäureester.

16. Verwendung eines Gemisches kettenförmiger und cyclischer Siloxan-Oligomerer nach den Ansprüchen 1 bis 14 zur Verbesserung der mechanischen Festigkeit und optischen Eigenschaften von Kunststoffgegenständen und Formkörpern.

17. Verwendung eines Gemisches kettenförmiger und cyclischer Siloxan-Oligomerer nach den Ansprüchen 1 bis 14 für die Oberflächenbehandlung von Glasfasern.

18. Verwendung eines Gemisches kettenförmiger und cyclischer Siloxan-Oligomerer nach den Ansprüchen 1 bis 14 zur Modifizierung und Vernetzung organischer Harze.

19. Verwendung eines Gemisches kettenförmiger und cyclischer Siloxan-Oligomerer nach den Ansprüchen 1 bis 14 als Bindemittel in Lacken und als Komponente in Klarlacken.

20. Verwendung eines Gemisches kettenförmiger und cyclischer Siloxan-Oligomerer nach den Ansprüchen 1 bis 14 zur Herstellung von Beschichtungen, die durch Wärmebehandlung bei einer Temperatur von 40 bis 200 °C und/oder durch Behandlung mit Strahlung in an sich bekannter Weise zur Aushärtung gebracht werden.

21. Verwendung eines Gemisches kettenförmiger und cyclischer Siloxan-Oligomerer nach den Ansprüchen 1 bis 14 für die Behandlung oder Beschichtung von mineralischen oder metallischen Oberflächen.

22. Verwendung eines Gemisches kettenförmiger und cyclischer Siloxan-Oligomerer nach den Ansprüchen 1 bis 14 zur Oberflächenbehandlung pulverförmiger Stoffe.

## Claims

1. A mixture of linear and cyclic siloxane oligomers of the general formulae I and II 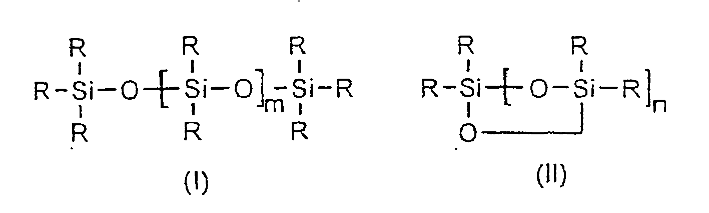
in which the substituents R consist of 3-methacryloxypropyl or 3-acryloxypropyl groups and methoxy, ethoxy and/or propoxy groups and if desired alkyl, fluoroalkyl, isoalkyl and/or cycloalkyl groups having from 1 to 18 carbon atoms and/or aryl groups having from 6 to 12 carbon atoms, not more than one 3-methacryloxypropyl or 3-acryloxypropyl group being attached to one silicon atom and the degree of oligomerization of compounds of the general formula I lying within the range 2 < m < 25 and that of compounds of the general formula II lying within the range 2 ≤ n ≤ 8 and the quotient of the molar proportion of Si/alkoxy group being ≥ 0.5.

2. A mixture of linear and cyclic siloxane oligomers according to claim 1, **characterized by** an alkoxy group content of more than 0.1% by weight and less than 30% by weight, based on the weight of the siloxane oligomers present.

3. A mixture of linear and cyclic siloxane oligomers according to claim 1 or 2, **characterized in that** the substituents R consist of (i) 3-methacryloxypropyl groups and (ii) methoxy or ethoxy groups.

4. A mixture of linear and cyclic siloxane oligomers according to claim 1 or 2, **characterized in that** the substituents R consist of (i) 3-methacryloxypropyl groups and (ii) methoxy or ethoxy groups and (iii) methyl, propyl, isobutyl, octyl, hexadecyl or phenyl groups.

5. A mixture of linear and cyclic siloxane oligomers according to claim 1 or 2, **characterized in that** the substituents R consist of (i) 3-methacryloxypropyl groups and (ii) methoxy or ethoxy groups and (iii) methyl groups and (iv) propyl, isobutyl, octyl, hexadecyl or phenyl groups.

6. A mixture of linear and cyclic siloxane oligomers according to any one of claims 1 to 5, **characterized by** a viscosity of from 3 to 80 mPa s.

7. A mixture of linear and cyclic siloxane oligomers according to any one of claims 1 to 6, **characterized by** a flash point > 100°C.

8. A mixture of linear and cyclic siloxane oligomers according to at least one of claims 1 to 7, **characterized by** a boiling point > 200°C.

9. A mixture of linear and cyclic siloxane oligomers according to at least one of claims 1 to 8, **characterized by** less than 0.5% by weight of components A, selected from the group 3-methacryloxypropyltrialkoxysilane, 3-acryloxypropyltrialkoxysilane, 3-methacryloxypropylmethyldialkoxysilane and 3-acryloxypropylmethyldialkoxysilane, B, selected from the group alkyl-, fluoroalkyl-, isoalkyl- or cycloalkyl- having from 1 to 18 carbon atoms or phenyl-trialkoxysilane, alkyl-, fluoroalkyl-, isoalkyl- or cycloalkyl- having from 1 to 18 carbon atoms or phenyl-methyldialkoxysilane, or a mixture thereof, and C, a tetraalkoxysilane, and less than 2% by weight of free alcohol.

10. A process for preparing a mixture of linear and cyclic siloxane oligomers according to any of claims 1 to 9 by controlled hydrolysis using a 3-methacryloxypropyltrialkoxysilane or a 3- acryloxypropyltrialkoxysilane, or a 3-methacryloxypropylmethyldialkoxysilane or a 3-acryloxypropylmethyldialkoxysilane as a component A and, if desired, an alkyl-, fluoroalkyl-, isoalkyl- or cycloalkyl- having from 1 to 18 carbon atoms or phenyl-trialkoxysilane or an alkyl-, fluoroalkyl-, isoalkyl- or cycloalkyl- having from 1 to 18 carbon atoms or phenyl-methyldialkoxysilane, or a mixture thereof, as component B, and, if desired, a tetraalkoxysilane as component C and adding from 0.6 to 1.0 mole of water per mole of Si and from 0.1 to 5 times the amount by weight of methanol and/or ethanol, based on the alkoxysilanes employed, in the presence of an acid as catalyst, subjecting the resulting mixture to controlled hydrolysis and condensation at a temperature of from 10 to 95°C and, subsequently, working up the product mixture by distillation under reduced pressure and at a liquid-phase temperature of from 30 to 110°C.

11. A process according to claim 10, **characterized in that** components A, B and C are employed in a molar ratio A:B:C of from 1:0:0 to 1:10:0 or from 1:0:0 to 1:0:10 or from 1:0:0 to 1:10:10.

12. A process according to claim 10 or 11, **characterized in that** alkoxysilanes having methoxy or ethoxy groups corresponding to the alcohol that is used as solvent or diluent are employed.

13. A process according to any one of claims 10 to 12, **characterized in that** hydrogen chloride is employed as catalyst.

14. A process according to any one of claims 10 to 13, **characterized in that** the hydrolysis and condensation are carried out under atmospheric pressure at a temperature from 10 to 85°C.

15. The use of a mixture of linear and cyclic siloxane oligomers according to any of claims 1 to 14 as an additive in a casting resin that is based on flowable, curable methacrylic ester and is filled to a high level with finely divided inorganic filler.

16. The use of a mixture of linear and cyclic siloxane oligomers according to any of claims 1 to 14 to improve the mechanical strength and optical properties of a plastics article or molding.

17. The use of a mixture of linear and cyclic siloxane oligomers according to any of claims 1 to 14 to surface-treat glass fiber.

18. The use of a mixture of linear and cyclic siloxane oligomers according to any of claims 1 to 14 to modify and crosslink organic resin.

19. The use of a mixture of linear and cyclic siloxane oligomers according to any of claims 1 to 14 as a binder in coating material and as a component in transparent coating material.

20. The use of a mixture of linear and cyclic siloxane oligomers according to any of claims 1 to 14 to produce a coating which is cured conventionally by heat treatment at a temperature of from 40 to 200°C and/or by treatment with radiation.

21. The use of a mixture of linear and cyclic siloxane oligomers according to any of claims 1 to 14 to treat or coat a mineral or metallic surface.

22. The use of a mixture of linear and cyclic siloxane oligomers according to any of claims 1 to 14 to surface-treat a pulverulent substance.

## Revendications

1. Mélange d'oligomères de siloxane cycliques et à chaîne droite de 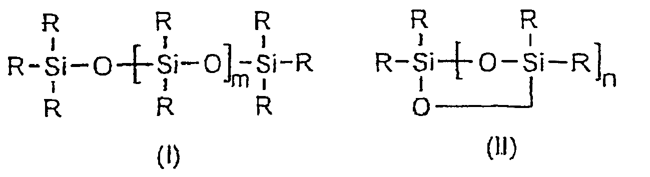 formules générales I et II,
dans lesquelles les substituants R sont constitués de groupes 3-méthacryloxypropyle ou 3-acryloxypropyle et de groupes méthoxy, éthoxy et/ou propoxy et, le cas échéant, de groupes alkyle, fluoralkyle, isoalkyle, cycloalkyle portant 1 à 18 atomes de C et/ou de groupes aryle portant 6 à 12 atomes de C, avec au plus un groupe 3-méthacryloxypropyle ou 3-acryloxypropyle lié à un atome de silicium, et le taux d'oligomérisation pour des composés de formule générale I est de l'ordre de 2 < m < 25 alors avec celui pour des composés de formule générale II est de l'ordre de 2 ≤ n ≤ 8, et le quotient du rapport molaire Si/groupement alcoxy étant ≥ 0,5.

2. Mélange d'oligomères de siloxane cycliques et à chaîne droite selon la revendication 1,
**caractérisé par**
une teneur en groupes alcoxy supérieure à 0,1 % en poids et inférieure à 30 % en poids, par rapport au poids des oligomères de siloxane présents.

3. Mélange d'oligomères de siloxane cycliques et à chaîne droite selon la revendication 1 ou 2,
**caractérisé en ce que**
les substituants R sont constitués (i) de groupes 3-méthacryloxypropyle et (ii)) de groupes méthoxy ou éthoxy.

4. Mélange d'oligomères de siloxane cycliques et à chaîne droite selon la revendication 1 ou 2,
**caractérisé en ce que**
les substituants R sont constitués (i) de groupes 3-méthacryloxypropyle et (ii) de groupes méthoxy ou éthoxy et (iii) de groupes méthyle, propyle, isobutyle, octyle, hexadécyle ou phényle.

5. Mélange d'oligomères de siloxane cycliques et à chaîne droite selon la revendication 1 ou 2,
**caractérisé en ce que**
les substituants R sont constitués (i) de groupes 3-méthacryloxypropyle et (ii) de groupes méthoxy ou éthoxy et (iii) de groupes méthyle et (iiii) de groupes propyle, isobutyle, octyle, hexadécyle ou phényle.

6. Mélange d'oligomères de siloxane cycliques et à chaîne droite selon l'une quelconque des revendications 1 à 5,
**caractérisé par**
une viscosité de 3 à 80 mPas.

7. Mélange d'oligomères de siloxane cycliques et à chaîne droite selon l'une quelconque des revendications 1 à 6,
**caractérisé par**
un point d'éclair supérieur à 100°C.

8. Mélange d'oligomères de siloxane cycliques et à chaîne droite selon au moins l'une quelconque des revendications 1 à 7,
**caractérisé par**
un point d'ébullition supérieur à 200°C.

9. Mélange d'oligomères de siloxane cycliques et à chaîne droite selon au moins l'une quelconque des revendications 1 à 8,
**caractérisé par**
moins de 0,5 % en poids de composant A, choisi dans la série constituée de 3-méthacryloxypropyltrialcoxysilane, de 3-acryloxypropyltrialcoxysilane, de 3-méthacryloxypropylméthyldialcoxysilane et de 3-acryloxypropylméthyldialcoxysilane, B choisi dans la série constituée d'alkylsilane, de fluoralkylsilane, d'isoalkylsilane, de cycloalkylsilane, portant 1 à 18 atomes de C ou de phényltrialcoxysilane, d'alkylsilane, de fluoralkylsilane, d'isolalkylsilane, de cycloalkylsilane portant 1 à 18 atomes de C ou de phényl-méthyldialcoxysilane ou leur mélange, et C, un tétraalcoxysilane, et par moins de 2 % en poids d'alcools libres.

10. Procédé de fabrication d'un mélange d'oligomères de siloxane cycliques et à chaîne droite selon les revendications 1 à 9 par hydrolyse ciblée, en utilisant un 3-méthacryloxypropyltrialcoxysilane ou un 3-acryloxypropyltrialcoxysilane ou un 3-méthacryloxypropylméthyldialcoxysilane ou un 3-acryloxypropyl-méthyldialcoxysilane en tant que composant A et, le cas échéant, un alkylsilane, un fluoralkylsilane, un isoalkylsilane, un cycloalkylsilane portant 1 à 18 atomes de C ou un phényltrialcoxysilane ou un alkylsilane, un fluoralkylsilane, un isoalkylsilane, un cycloalkylsilane portant 1 à 18 atomes de C ou un phénylméthyldialcoxysilane ou leur mélange en tant que composant B et, le cas échéant, un tétraalcoxysilane en tant que composant C, et on hydrolyse de manière ciblée en ajoutant de 0,6 à 1,0 mole d'eau pour 1 mole de Si et de 0,1 à 5 fois la quantité en poids de méthanol et/ou d'éthanol, par rapport aux alcoxysilanes mis en oeuvre, en présence d'un acide en tant que catalyseur à une température de 10 à 95°C, et on condense puis on traite le mélange de produits par distillation à une pression réduite et à une température de fond de 30 à 110°C.

11. Procédé selon la revendication 10,
**caractérisé en ce qu'**
on utilise les composants A, B et C dans un rapport molaire A:B:C de 1:0:0 à 1:10:0 ou de 1:0:0 à 1:0:10 ou de 1:0:0 à 1:10:10.

12. Procédé selon la revendication 10 ou 11,
**caractérisé en ce qu'**
on utilise des alcoxysilanes avec un alcool correspondant à des groupes méthoxy ou éthoxy utilisé en tant que solvant respectivement diluant.

13. Procédé selon l'une quelconque des revendications 10 à 12,
**caractérisé en ce qu'**
on utilise du chlorure d'hydrogène en tant que catalyseur.

14. Procédé selon l'une quelconque des revendications 10 à 13,
**caractérisé en ce qu'**
on réalise l'hydrolyse et la condensation à la pression normale à une température de 10 à 85°C.

15. Utilisation d'un mélange d'oligomères de siloxane cycliques et à chaîne droite selon les revendications 1 à 14, en tant qu'additifs dans des résines coulées, hautement chargées en charges inorganiques finement dispersées, à base d'esters de l'acide méthacrylique fluides et durcissables.

16. Utilisation d'un mélange d'oligomères de siloxane cycliques et à chaîne droite selon les revendications 1 à 14, pour améliorer la résistance mécanique et les propriétés optiques d'objets en matières plastiques et de corps moulés.

17. Utilisation d'un mélange d'oligomères de siloxane cycliques et à chaîne droite selon les revendications 1 à 14, pour le traitement de surface de fibres de verre.

18. Utilisation d'un mélange d'oligomères de siloxane cycliques et à chaîne droite selon les revendications 1 à 14, pour modifier et réticuler des résines organiques.

19. Utilisation d'un mélange d'oligomères de siloxane cycliques et à chaîne droite selon les revendications 1 à 14, en tant que liant dans des peintures et en tant que composant dans des vernis clairs.

20. Utilisation d'un mélange d'oligomères de siloxane cycliques et à chaîne droite selon les revendications 1 à 14, pour fabriquer des revêtements qui sont amenés à durcir d'une manière connue en soi par un traitement thermique à une température de 40 à 200°C et/ou par un traitement par rayonnement.

21. Utilisation d'un mélange d'oligomères de siloxane cycliques et à chaîne droite selon les revendications 1 à 14, pour le traitement ou le revêtement de surfaces minérales ou métalliques.

22. Utilisation d'un mélange d'oligomères de siloxane cycliques et à chaîne droite selon les revendications 1 à 14, pour le traitement de surface de substances poudreuses.
